# EUROPEAN PATENT APPLICATION

(11) **EP 1 991 023 A1**
(43) Date of publication of application: **12.11.2008**
(21) Application number: 07737529.3
(22) Date of filing: 28.02.2007
(51) Int. Cl.: H04Q 7/38

(54) **MOBILE COMMUNICATION SYSTEM, BASE STATION, MOBILE DEVICE, NOTIFYING METHOD, PROGRAM, AND RECORDING MEDIUM**

(30) Priority: 01.03.2006 JP 2006054254
(71) Applicant: NEC CORPORATION, Minato-ku, Tokyo 108-8001 (JP)
(72) Inventor: YAMAHIRA, Atsushi, Tokyo 108-8001 (JP)
(74) Representative: Glawe, Delfs, Moll
(86) International application number: PCT/JP2007/053810
(87) International publication number: WO 2007/100012

(57) **Abstract**

A mobile terminal is provided to communicate in accordance with a notice indicating whether or not an HSDPA communication is possible. The mobile terminal receives HSDPA communication permission/inhibition data transmitted from a base station, in whose cell area the mobile terminal is present, via an antenna and a receiving section, and decodes the received data by a decoding section. A CPU analyzes the HSDPA communication permission/inhibition data decoded by the decoding section and controls a display control section to display a pictogram on a display to indicate the notice of whether or not the HSDPA communication is possible (HSDPA communication permission or HSDPA communication inhibition).

## Description

### Technical Field

The present invention relates to a mobile communication system, a base station, a mobile terminal, a notifying method, a program and a recording medium, and more particularly relates to a method of notifying that an HSDPA (High Speed Downlink Packet Access) communication is possible, to the mobile terminal.

### Background Art

Conventionally, in an HSDPA (High Speed Downlink Packet Access) service in which a mobile terminal can receive a packet by receiving a control data to notify transmission of the packet from a base station, a DPCH (Dedicated Physical Channel) [DL (Downlink)/UL (Uplink)] is set between the mobile terminal and the base station.

A base station control apparatus such as an RNC (Radio Network Controller) is connected to the base station. The mobile terminal always receives HS-SCCH (High Speed Shared Control Channel) data of 4 channels specified by the base station, and detects a mobile terminal ID (Identifier) included in the data transmitted on HS-SCCH and determines whether or not the detected mobile terminal ID is coincident with a mobile terminal ID of the self-station.

If the mobile terminal ID of the self-station is detected in the data transmitted on HS-SCCH, the mobile terminal uses a control data transmitted through the HS-SCCH and receives a signal transmitted on HS-PDSCH (High Speed Physical Downlink Shard Channel) in a delay of a predetermined time from the reception of a signal on the HS-SCCH. Also, when a data to be transmitted in an individual channel such as a control data in a higher layer or a user data to be sent is generated, the mobile terminal and the base station immediately transmit it by using DPCH (UL/DL) (for example, this is noted in "3GPP TR (Technical Report) 25.858,V5.0.0, March 2002").

In the specification of the HSDPA, a network determines a maximum communication capacity (bit rate) at the time of the transmission by the mobile terminal and communication resources and instructs an HSDPA communication start to the mobile terminal, if the HSDPA communication is possible. Thus, the user of the mobile terminal cannot know whether or not the HSDPA communication is possible, until reception of an instruction from the network when it is transmitted or when a communication rate is increased.

The HSDPA specification dos not have an index to determine whether or not the HSDPA communication is possible. Thus, until a throughput after the packet communication connection is confirmed, it is impossible to determine whether or not the HSDPA communication is possible. In particular, in a waiting state or in a low rate communication state, whether or not the HSDPA communication is possible cannot be determined.

It should be noted that as techniques related to this application, Japanese Patent Application Publications (JP-P2003-115796A, JP-P2003-198665A) and JP-P2004-147049A) are known. Japanese Patent Application Publication (JP-P2003-115796A) describes a method of transmitting the data, which is commonly applied to a plurality of terminals inside a cell occupied by the base station connected to the base station controller, to the plurality of terminals. A generating process generates the data, which includes an indicator indicating that the data is changed, when the commonly applied data is changed. The transmitting process transmits the data through the base station to the terminal.

Japanese Patent Application Publication (JP-P2003-198665A) describes a portable phone having a function which, when an event requiring a background process occurs, notifies the occurrence. This portable phone contains a notifying unit which, while the occurrence of the event is notified, when a new event requiring a new background process occurs, notifies the occurrence of the new event.

Japanese Patent Application Publication (JP-P 2004-147049A) describes a mobile communication system which, when a mobile station receives a control data to notify the transmission of a packet from a base station, the mobile station can receive the packet. The base station has a unit for notifying to the mobile station, transmission/reception state update data which indicates the updating of the state as to whether or not the mobile station can receive the packet. In accordance with the transmission/reception state update data, any one of an active state and a suspension state is set. The active state allows the mobile station to receive the control data for the transmission of the packet; and the suspension state inhibits the mobile station from receiving the control data for the transmission of the packet is set.

### Disclosure of Invention

An object of the present invention is to provide a mobile communication system, a base station, a mobile terminal, a notifying method to a user, a program and a recording medium, to allow the mobile terminal to perform HSDPA communication in accordance with a notice of whether or not the HSDPA communication is possible.

The mobile communication system according to the present invention contains a mobile terminal and a base station which can carry out communication in an HSDPA (High Speed Downlink Packet Access) communication system. The base station adds a data indicating whether or not the HSDPA communication is possible, to a transmission data, when the mobile terminal is in a waiting state or in a low rate communication state, and transmits the added transmission data to the mobile terminal.

The base station according to the present invention can communicate with the mobile terminal in the HSDPA communication system. When the mobile terminal is in the waiting state or in the low rate communication state, the data indicating whether or not the HSDPA communication is possible is added to the transmission data destined to the mobile terminal.

The mobile terminal according to the present invention can communicate with the base station in the HSDPA communication system. When the mobile terminal is in the waiting state or in the low rate communication state, if the transmission data to which the data indicating whether or not the HSDPA communication is possible is added is transmitted from the base station to the mobile terminal, a pictogram is displayed on a display of the mobile terminal to indicate permission/inhibition of the HSDPA communication.

The notifying method according to the present invention is a notifying method in which the base station notifies that the HSDPA communication is possible, to the mobile terminal which can carry out the communication in the HSDPA communication system. The notifying method includes adding the data indicating whether or not the HSDPA communication is possible, to the transmission data destined to the mobile terminal, when the mobile terminal is in the waiting state or in the low rate communication state, and transmitting the added transmission data to the mobile terminal.

In the present invention, it is possible to produce a program for instructing a computer to execute the respective steps of the notifying method according to the present invention. Also, in the present invention, it is possible to produce a recording medium in which the program is recorded.

That is, the mobile communication system of the present invention, in the mobile communication system which can provide the HSDPA (High Speed Downlink Packet Access) service that allows the mobile terminal to receive a packet by receiving a control data to notify the transmission of the packet from the base station, wherein when an existence cell, when an existence cell in which the mobile terminal is present or a communicable cell (designated in the network) handles the HSDPA communication, the control data indicating whether or not the HSDPA communication is possible is added to the transmission data in the consideration of the resources, and an HSDPA communication permission/inhibition data is transmitted from the network (the base station of the cell where the mobile terminal exists) to the mobile terminal. The mobile terminal dealing with the HSDPA communication receives the HSDPA communication permission/ inhibition data and notifies whether or not the HSDPA communication is possible, to a user of the mobile terminal through a unit for indicating the HSDPA communication permission/inhibition.

Specifically, in the mobile communication system of the present invention including a HSDPA-communicable cell (base station) and a W-CDMA (Wideband - Code Division Multiple Access) mobile terminal, , a data indicating that the HSDPA communication is possible is notified from the network (the base station of the cell where the mobile terminal exists) to the mobile terminal, when the HSDPA communication is possible, and a notifying unit to a user in which the mobile terminal receiving the data displays a particular pictogram. Here, the pictogram display is a display function for notifying the occurrences of various events to the user without ringing a ringtone or switching the screen.

Consequently, in the mobile communication system of the present invention, whether or not the HSDPA communication is possible is notified to the user in a waiting state or a state before a communication rate is increased (a low rate communication state). Thus, the user can carry out the communication in response to the notice of whether or not the HSDPA communication is possible. Also, in the mobile communication system of the present invention, a HSDPA communication dealing cell and a non-dealing cell are mixed when the HSDPA communication is introduced. In this case, by notifying the HSDPA communication permission/inhibition data, the user can know an area where the HSDPA communication is possible.

According to the present invention, it is possible to obtain the effect that the communication can be carried out in response to the notice indicating whether or not the HSDPA communication is possible.

### Brief Description of Drawings

FIG. 1 is a block diagram showing a configuration of a mobile communication system according to an exemplary embodiment of the present invention;
FIG. 2 is a block diagram showing a configuration of a mobile terminal in FIG. 1;
FIG. 3 is a diagram showing a particular pictogram displayed onto a display shown in FIG. 2;
FIG. 4 is a block diagram showing a configuration of a base station in an existence cell in which the mobile terminal according to the exemplary embodiment of the present invention exists or a communicable cell;
FIG. 5 is a flowchart showing an operation of the base station shown in FIG. 4; and
FIG. 6 is a flowchart showing an operation of the mobile terminal shown in FIG. 2.

### Best Mode for Carrying Out the Invention

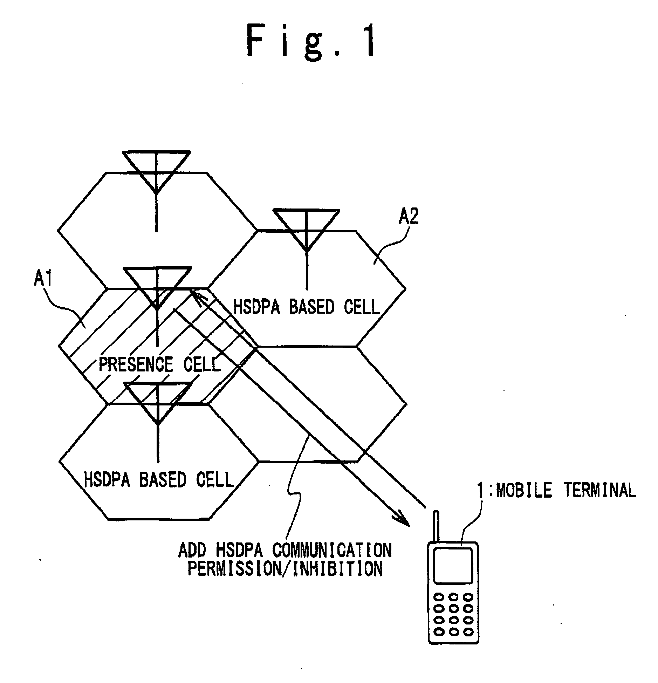

The present invention will be described below in detail with reference to the drawings. FIG. 1 is a block diagram showing the configuration of the mobile communication system according to an exemplary embodiment of the present invention. In FIG. 1, the mobile communication system according to this exemplary embodiment is provided with a mobile terminal 1, a cell A1 and a cell A2: the mobile terminal exists in the cell A1 and can communicate with a base station in the cell A2.

In the mobile communication system according to this exemplary embodiment, a base station (not shown) of the cell A1 in which the mobile terminal 1 exists determines whether or not HSDPA (High Speed Downlink Packet Access) can be accomplished in the cell A1 or a communicable cell A2 and whether or not there are sufficient resources, and adds the permission/ inhibition of the HSDPA communication to a transmission data and transmits to the mobile terminal 1.

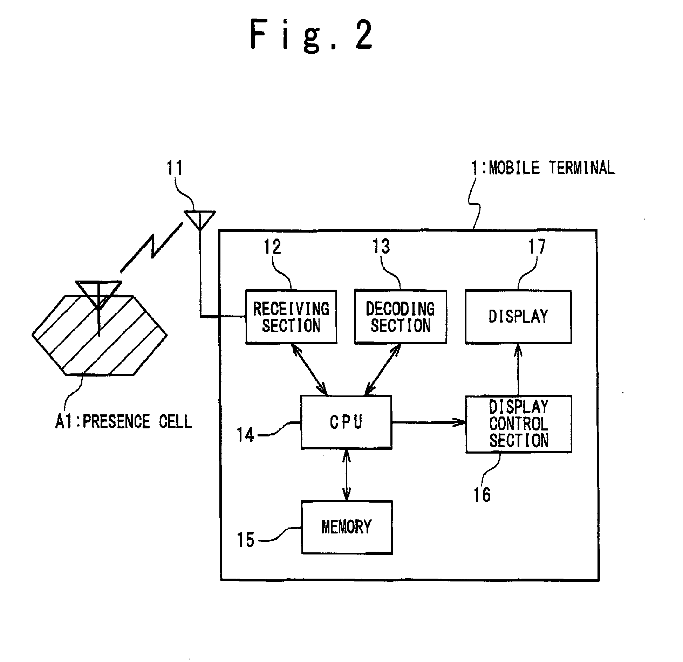

FIG. 2 is a block diagram showing the configuration of the mobile terminal 1 in FIG. 1. In FIG. 2, the mobile terminal 1 is provided with an antenna 11, a receiving section 12, a decoding section 12, a CPU (Central Processing Unit) 14, a memory 15 for holding a program executed by the CPU 14, a display control section 16 and a display 17.

The mobile terminal 1 receives the HSDPA permission/inhibition data transmitted from the base station in the existence cell A1 through the antenna 11 and the receiving section 12, and the HSDPA permission/inhibition data is decoded by the decoding section 12. The CPU 14 analyzes the HSDPA permission/inhibition data decoded by the decoding section 12, and display a particular pictogram of the analyzing result on the display 17 by the display control section 16. Here, the pictogram display is a display function for notifying the various events to the user without ringing a ringtone or switching the display screen.

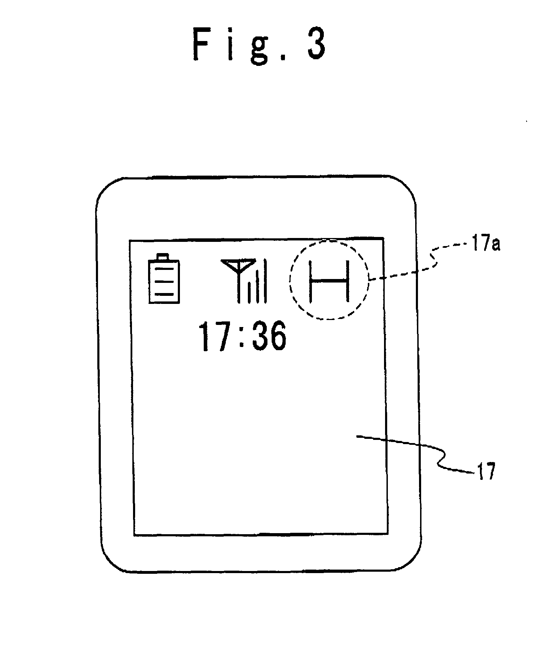

FIG. 3 is a diagram showing the particular pictogram display on the display 17 shown in FIG. 2. In FIG. 3, the permission/inhibition of the HSDPA communication is displayed in a particular pictogram display 17a on the display 17, and it is notified to the user. For example, in this control, it is considered that the particular pictogram display 17a is performed only when the HSDPA communication is possible and nothing is displayed when the HSDPA communication is impossible. In this exemplary embodiment, the user notifying unit in the mobile terminal 1 is assumed to be the particular pictogram display 17a.

A network [a base station (not shown) in the existence cell A1 in which the mobile terminal 1 exists or in the communicable cell A2] determines whether the existence cell A1 or the communicable cell A2 deals with the HSDPA communication and whether or not there are sufficient resources and consequently determines whether or not the HSDPA communication is possible. The network adds the permission/inhibition of the HSDPA communication to a transmission data and transmits the transmission data to the mobile terminal 1. The mobile terminal 1 dealing with the HSDPA communication receives the data of the HSDPA communication permission/ inhibition, performs the particular pictogram display 17a and consequently notifies the HSDPA communication permission/inhibition to the user.

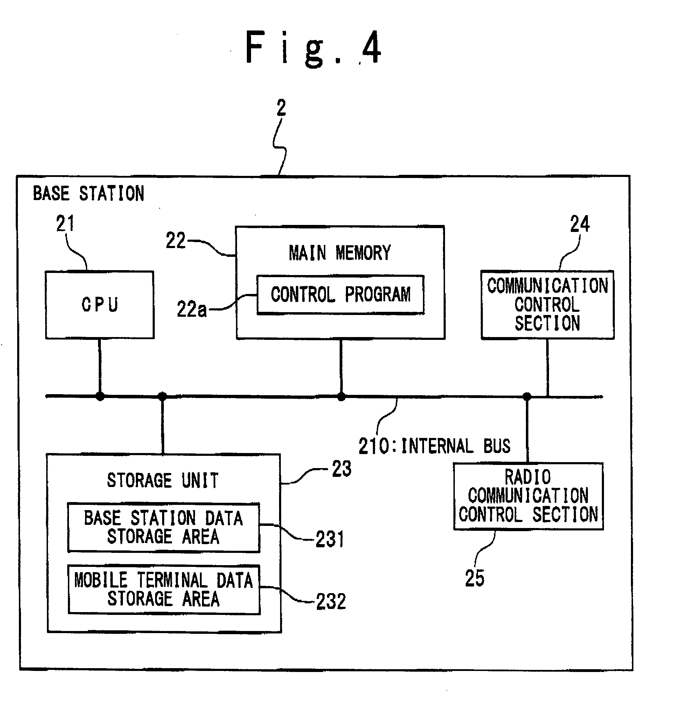

FIG. 4 is a block diagram showing the configuration example of a base station 2 in the existence cell A1 or the communicable cell A2. In FIG. 4, the base station 2 is provided with a CPU 21, a main memory 22 for storing a control program 22a executed by the CPU 21, a storage unit 23 for holding data that is used when the CPU 21 executes the control program 22a, a communication control section 24 for controlling a communication with a unit of a higher layer such as RNC (Radio Network Control) that is not shown, and a radio communication control section 25 for controlling radio communication with the mobile terminal 1 in the cell managed by a self-station.

The storage unit 23 contains a base station data holding area 231 and a mobile terminal data holding area 232, and the base station data holding region 231 holds at least a base station number and a data indicating whether the HSDPA communication can be dealt with in the base station, and the mobile terminal data holding area 232 holds at least a data of the mobile terminal 1 existing therein and the numbers of the base station that can be communicated from the mobile terminal 1. Each of the CPU 21, the main memory 22, the storage unit 23, the communication control section 24 and the radio communication control section 25 are connected to an internal bus 210.

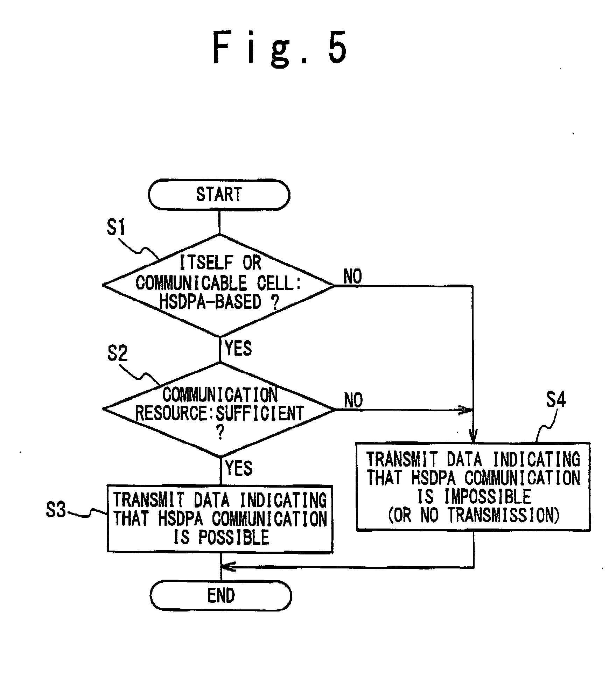

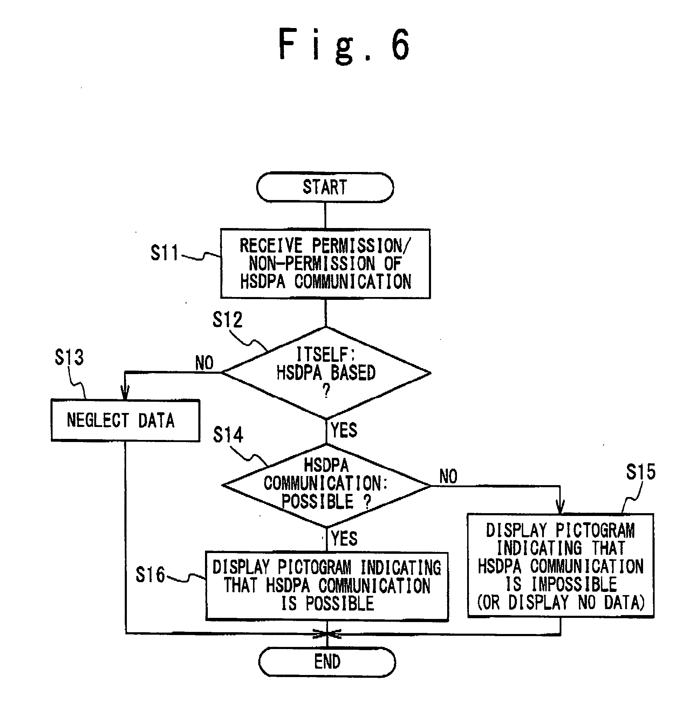

FIG. 5 is a flowchart showing an operation of the base station 2 shown in FIG. 4. FIG. 6 is a flowchart showing an operation of the mobile terminal 1 shown in FIG. 2. The operation of the mobile communication system according to this exemplary embodiment of the present invention will be described below with reference to FIGS. 1 to 6. It should be noted that the process shown in FIG. 5 is attained when the CPU 21 executes the control program 22a, and the process shown in Fug. 6 is attained when the CPU 14 executes the program 22a stored in the memory 15. Also, the operation shown in FIG. 5 is assumed to be the operation of the base station 2 in the existence cell A1.

The base station 2 in the existence cell A1 in which the mobile terminal 1 exists carries out the following operation when a mobile terminal 1 is added as the existing terminal or for every predetermined time. At first, the CPU 21 in the base station 2 in the existence cell A1 determines whether or not the base stations (not shown) in the existence cell A1 and the communicable cell A2 can deal with the HSDPA communication, based on the data in the base station data holding area 231 and the mobile terminal data holding area 232 in the storage unit 23 (Step S1 in FIG. 5). When the base station in the existence cell A1 or in the communicable cell A2 does not deal with the HSDPA communication, the CPU 21 in the base station 2 adds a data indicating the HSDPA communication inhibition to a transmission data and transmits the transmission data to the mobile terminal 1 or does not transmit any data (Step S4 in FIG. 5).

On the other hand, when the base station in the existence cell A1 or in the communicable cell A2 can deal with the HSDPA communication, the CPU 21 in the base station 2 checks whether or not the resources for the HSDPA communication are sufficient, based on the data in the base station data holding area 231 and the mobile terminal data holding area 232 (or management data of the base station by a unit of a higher layer) (Step S2 in FIG. 5). When the resources for the base station in the existence cell A1 or in the communicable cell A2 are not sufficient, the CPU 21 in the base station 2 adds a data indicating HSDPA communication inhibition to the transmission data to the mobile terminal 1 and transmits it to the mobile terminal 1, or does not transmit nothing (Step S4 in FIG. 5).

When the resources of the base station in the cell A1 or the cell A2 are sufficient, the CPU 21 in the base station 2 adds a data indicating the HSDPA communication permission to the transmission data and transmits it to the mobile terminal 1 (Step S3 in FIG. 5).

The operation of the mobile terminal 1 obtaining the permission/inhibition data of the HSDPA communication will be described below with reference to FIG. 6. If the CPU 14 in the mobile terminal 1 receives the transmission data from the base station 2 through the antenna 11 and the receiving section 12 in a waiting state or a state before the communication rate is increased (the low rate communication) (Step S11 in FIG. 6), determines whether or not the mobile terminal itself can deal with the HSDPA communication (Step S12 in FIG. 6). When the mobile terminal 1 does not deal with the HSDPA communication, the CPU 14 in the mobile terminal 1 ignores the transmission data from the base station 2 (Step S13 in FIG. 6).

When the mobile terminal 1 can deal with the HSDPA communication, the CPU 14 in the mobile terminal 1 checks the transmission data from the base station 2 and determines whether or not the HSDPA communication is possible (Step S14 in FIG. 6). When the HSDPA communication is impossible, the CPU 14 in the mobile terminal 1 carries out the pictogram display (refer to FIG. 3) on the screen of the display 17 to indicate that the HSDPA communication is impossible or displays nothing (Step S15 in FIG. 6).

When the HSDPA communication is possible, the CPU 14 in the mobile terminal 1 carries out the pictogram display (refer to FIG. 3) on the screen of the display 17 to indicate that the HSDPA communication is possible (Step S16 in FIG. 6).

In this way, whether or not the HSDPA communication is possible is notified to the user in the waiting state or the state before the communication rate is increased (the low rate communication). Thus, the user can carry out the communication in response to the notice indicating that the HSDPA communication is possible.

Also, in this exemplary embodiment, it is considered that the dealing cell and the non-dealing cell are present mixedly when the HSDPA is introduced. Thus, the user can know the corresponding area by notifying whether or not the HSDPA communication is possible is notified to the user.

## Claims

1. A mobile communication system comprising:
a mobile terminal configured to be able to perform communication in an HSDPA (High Speed Downlink Packet Access) communication system; and
a base station,
wherein said base station adds to a transmission data, a data indicating whether or not the HSDPA communication is possible, when said mobile terminal is in a waiting state or in a low rate communication state, and transmits the added transmission data to said mobile terminal.

2. The mobile communication system according to claim 1, wherein said base station adds the data indicating that the HSDPA communication is possible, to the transmission data, when another base station communicable with said mobile terminal in an cell area provided by said base station deals with the HSDPA communication, and said another base station has resources sufficient to communicate with said mobile terminal.

3. The mobile communication system according to claim 1 or 2, wherein said mobile terminal displays on a display, a pictogram indicating permission/inhibition of the HSDPA communication when the added transmission data is received from said base station.

4. A base station which adds to a transmission data, a data indicating whether or not an HSDPA communication is possible, if said mobile terminal is in a waiting state or in a low rate communication state, when a mobile terminal is communicable with another base station in an HSDPA (High Speed Downlink Packet Access) communication system, and transmits the added transmission data to said mobile terminal.

5. The base station according to claim 4,
wherein said base station adds the data indicating that the HSDPA communication is possible, to the transmission data, when said another base station communicable with said mobile terminal in an cell area provided by said base station deals with HSDPA communication, and said another base station has resources sufficient to communicate with said mobile terminal.

6. A mobile terminal which can perform communication in an HSDPA (High Speed Downlink Packet Access) communication system, and
wherein a data indicating whether or not an HSDPA communication is possible is added to a transmission data and the added transmission data is transmitted from a base station to said mobile terminal, when said mobile terminal is in a waiting state or in a low rate communication state, and
a pictogram is displayed on a display of said mobile terminal based on the added transmission data.

7. The mobile terminal according to claim 6,
wherein the pictogram is displayed on the display to indicate that the HSDPA communication is possible, when another base station communicable with said mobile terminal deals with the HSDPA communication and said another base station has resources sufficient to communicate with said mobile terminal.

8. A method of notifying that HSDPA (High Speed Downlink Packet Access) communication is possible, from a base station to a mobile terminal which can perform communication in an HSDPA communication system, said method comprising:
adding to a transmission data by said base station, a data indicating whether or not the HSDPA communication is possible, when said mobile terminal is in a waiting state or in a low rate communication state; and
transmitting the added transmission data to said mobile terminal.

9. The method according to claim 8, wherein said adding comprises:
adding the data indicating that he HSDPA communication is possible, to the transmission data by said base station, when another base station communicable with said mobile terminal in an cell area provided by said base station deals with HSDPA communication, and said another base station has resources sufficient to communicate with said mobile terminal.

10. The method according to claim 8 or 9, further comprises:
displaying on a display, a pictogram indicating permission/inhibition of the HSDPA communication by said mobile terminal based on the added transmission data received from said base station.
